# EUROPEAN PATENT SPECIFICATION

(11) **EP 3 702 218 B1**
(45) Date of publication and mention of the grant of the patent: **22.09.2021**
(21) Application number: 20159536.0
(22) Date of filing: 26.02.2020
(51) Int. Cl.: B60R 7/02, B60R 7/04

(54) **A CONTAINER FOR A VEHICLE AND A HEAVY VEHICLE CAB PROVIDED WITH THE SAME CONTAINER**
BEHÄLTER FÜR EIN FAHRZEUG UND EINE NUTZFAHRZEUGKABINE DAMIT AUSGESTATTET
RÉCIPIENT POUR VÉHICULE ET CABINE DE VÉHICULE LOURD POURVU POURVU DE CELUI-CI

(30) Priority: 26.02.2019 IT 201900002771
(43) Date of publication of application: 02.09.2020
(73) Proprietor: Iveco S.p.A., 10156 Torino (IT)
(72) Inventor: FINOTELLO, Roberto, 10040 LOMBARDORE (TO) (IT)
(74) Representative: Faraldi, Marco

(56) References cited:
- DE-A1- 19 501 875
- DE-A1-102004 056 026
- US-A1- 2008 011 759
- US-B1- 6 354 245

## Description

### CROSS-REFERENCE TO RELATED APPLICATIONS

This patent application claims priority from Italian patent application no. 102019000002771 filed on 26/02/2019.

### TECHNICAL FIELD

The invention relates to a container for a vehicle.

### KNOWN STATE OF THE ART

As it is known, some vehicles, in particular heavy vehicles, are provided with a habitable cab, which typically contains, on the inside, one or more containers, which are suited to store objects in an orderly and safe fashion.

Even though they are useful to fulfil the aforesaid purpose, these containers occupy spaces that could otherwise be habitable or could be used in a different way to install other elements.

Therefore, there is the need to store objects, in an orderly fashion, inside containers, which do not decrease the useful spaces available inside the vehicles.

To this regard, collapsible containers are known, namely that can be configured either in an extended condition, in which they can house objects, or in a collapsed condition, in which they free useful space.

These collapsible containers often comprise a plurality of movable parts, which are connected to one another and to the cab, so as to ensure the stiffness of the containers in the extended condition.

Examples of known collapsible containers are disclosed in DE102004056026A1, US2008011759A1, US6354245B1, and DE19501875A1. US2008011759A1 discloses a container according to the preamble of claim 1.

In general, alternative solutions are needed, which are simpler compared to known collapsible containers, but are at least as rigid as them in the extended condition, and have substantially flat supporting walls for the objects or, anyway, supporting walls that are such as to ensure the stability of the objects resting against them.

The object of the invention is to fulfil the needs discussed above in a simple and economic fashion.

### SUMMARY OF THE INVENTION

The aforesaid object is reached by a container for a vehicle and by a cab of a heavy vehicle provided with said container according to the appended claims.

### BRIEF DESCRIPTION OF THE DRAWINGS

The invention will be best understood upon perusal of the following detailed description of preferred embodiments, which are provided by way of non-limiting example, with reference to the accompanying drawings, wherein:
- figure 1 shows, in a perspective view and with parts removed for clarity, a heavy vehicle provided with a cab comprising a container according to an embodiment of the invention;
- figures 2 and 3 are side views, on a larger scale, which show the container of figure 1 in a collapsed condition and in an extended condition, respectively;
- figure 4 is a perspective view, on a larger scale, of the container in the extended condition of figure 3;
- figure 5 is a further enlargement of the container shown in figure 4;
- figure 6 shows, in a cross-sectional view, an enlarged detail of the container of figure 4 and 5;
- Figure 7 shows, in an exploded view, a container according to a further embodiment of the invention; and
- figure 8 shows, in a perspective view, a detail of the container of figure 7.

### DETAILED DESCRIPTION OF THE INVENTION

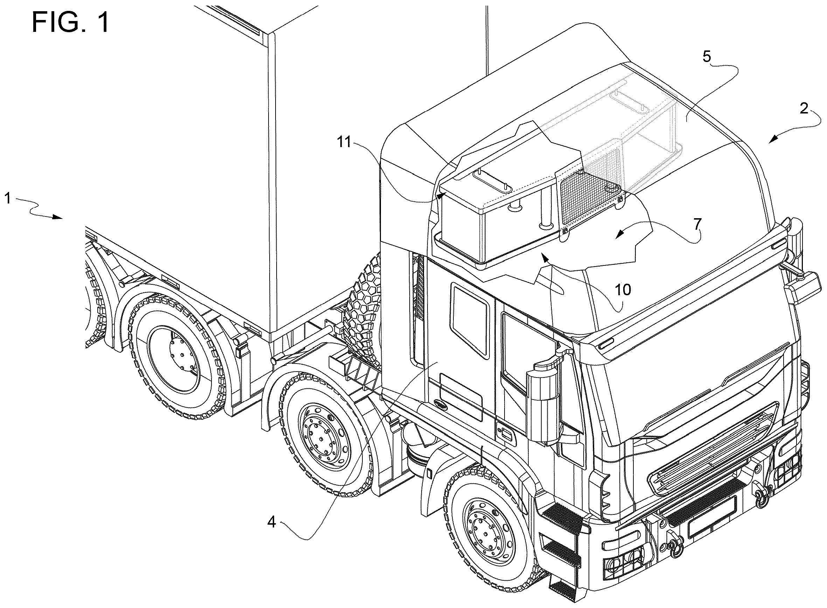

In figure 1, reference number 1 indicates, as a whole, a vehicle, in particular a heavy vehicle provided with a cab 2 designed to accommodate a user U.

The cab 2 comprises a known structure 4, which is provided with a plurality of walls, among which there are, for example, a floor 3, a roof 5 and a rear wall 6, which are connected to one another so as define a habitable space 7 for the user U.

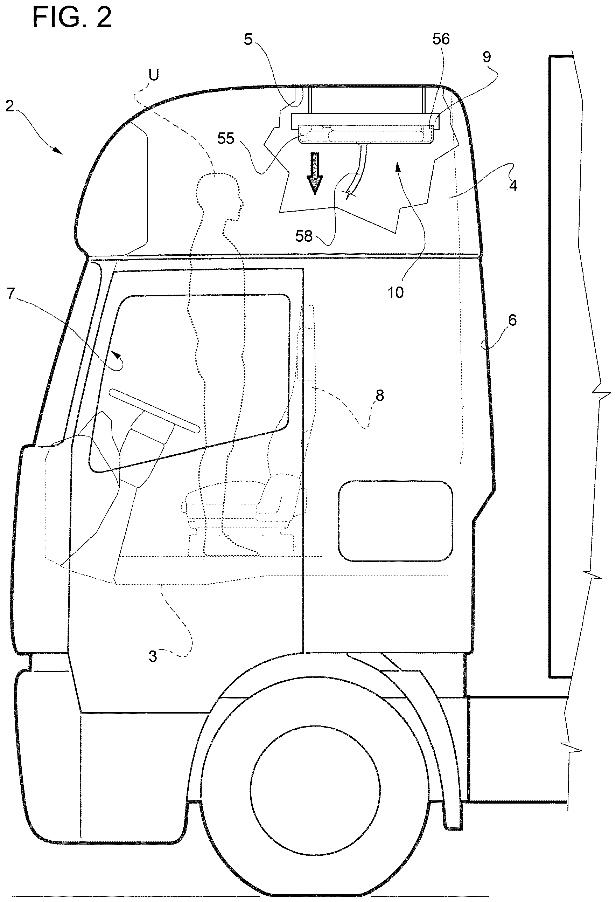

As visible from figure 2, the cab 2 further comprises a driver's seat 8 and a bed 9, which are carried by the structure 4 in a movable manner.

In particular, the bed 9 is coupled to the roof 5 in a vertically movable manner between a lifted position (figure 2), in which it is closer to the roof 5, and a lower position, in which it is farther from the roof 5 and is arranged at approximately half the height relative to the floor 3.

Furthermore, the cab 2 comprises a container 10 having a frame 11, which is directly or indirectly coupled to the structure 4 and is suitable, in use, to support personal objects of the user U.

The frame 11 preferably comprises a base panel or shelf 12, a pair of sides 13 and a roof 14, which are connected to one another so as to delimit, in use, a compartment 15, in which the user U can store objects in an orderly fashion.

When the frame 11 is in use, as it is shown, for example, in figure 1, the panel 12 is arranged horizontally and, therefore, is designed to support the objects inside the compartment 15.

The frame 11 comprises at least one inflatable portion, namely a portion which can be configured in a deflated state, in which it occupies a space having a minimum volume, and an inflated state, in which the space taken up is larger.

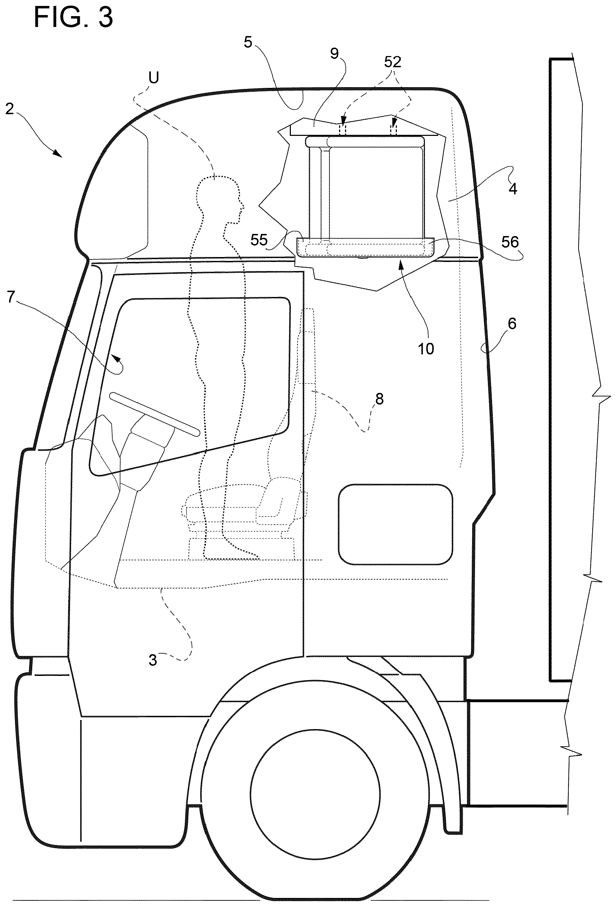

In the embodiments shown herein, the said inflatable portion comprises the panel 12. In other words, the panel 12 is empty on the inside, namely it is provided with an outer wall 23 (figure 3), which delimits, on the inside, a space 24, which can be filled with a pressurised inflating gas.

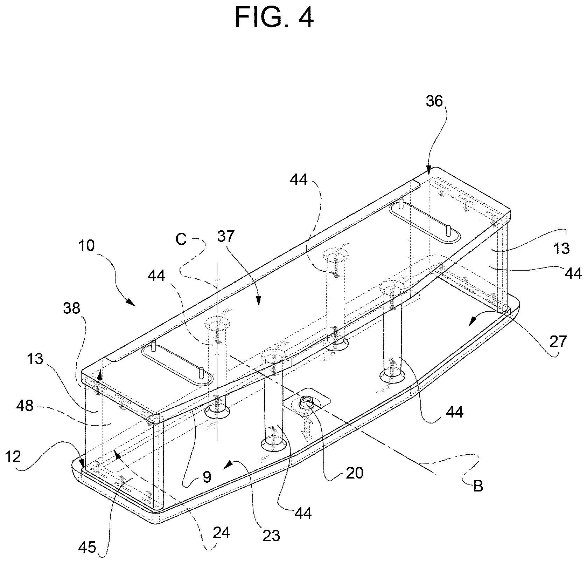

In order to allow the space 24 to be filled, the panel 12 comprises a known sealing valve 20 (figure 4), which is carried by the wall 23 in a fixed position.

The sealing valve 20 can be connected to a source of the pressurised inflating gas, so as to let a flow thereof through the wall 23 towards the space 24.

On the other hand, in order to allow the space 24 to be emptied, the panel 12 comprises a known release, which is not shown herein.

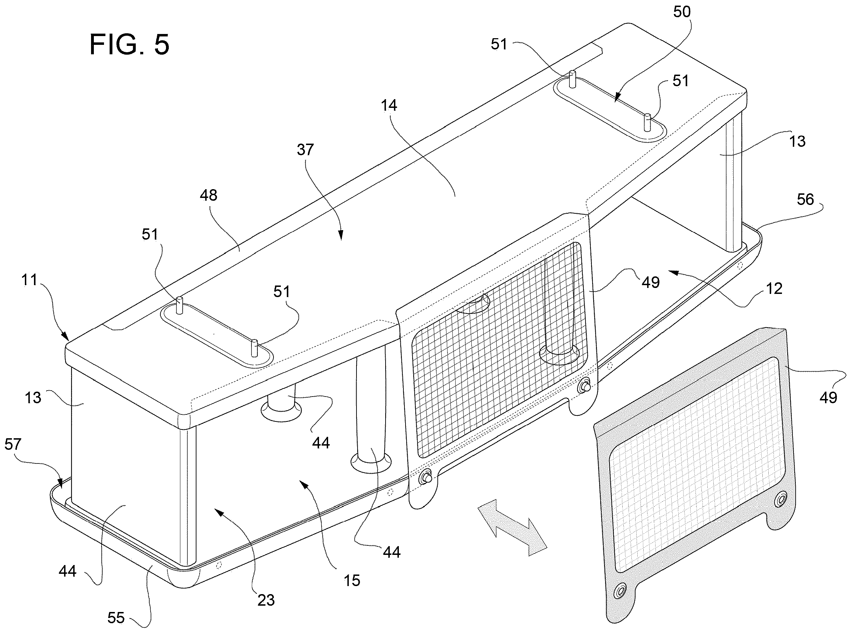

When the panel 12 is in the deflated state, the volume of the space 24 is minimum, whereas the volume of the space 24 is maximum when the panel 12 is in the inflated state (figures 4 and 5). Furthermore, when it is in the deflated state, the panel 12 is flexible, can be folded and/or can be rolled.

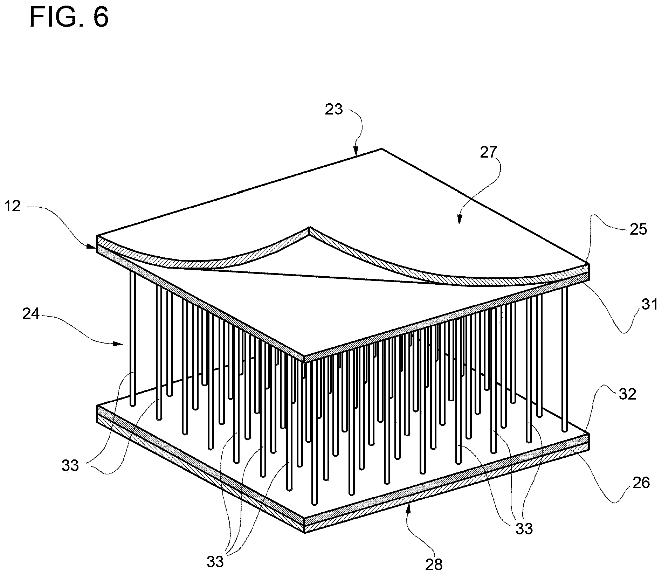

The wall 23 has two wall portions 25, 26 (figures 3 and 6), which face one another and define, when the frame 11 is coupled to the structure 4 and the panel 12 is in the inflated state, respective outer horizontal surfaces 27, 28; the wall portions 25, 26 are, for example, multi-layer portions. In particular the layer most on the outside is made of a thermosetting or thermoplastic polymer material, in particular polyvinyl chloride (PVC).

Furthermore, the wall portions 25, 26 comprise respective fabric layers 31, 32, which delimit the space 24.

In particular, the fabric layers 31, 32 are made of a polymer base, for example comprising polyesters or aliphatic polyamides, also known as Nylon®.

The fabric layers 31, 32 are sewn to one another by means of a plurality of thread segments 33, which are arranged inside the space 24 and are made, for example, of a polymer fibre, preferably the same as the one of the fabric layers 31, 32.

The thread segments 33 extend crosswise to the wall portions 25, 26 when the panel 12 is in the inflated state, as they are stretched by means of the pressure of the inflating gas.

In this way, the fact that the thread segments 33 are stretched prevents the surfaces 27 and 28 from arbitrarily spreading apart during and after the filling of the space 24. More in detail, the surfaces 27, 28 remain fixed relative to one another when the pressure in the space 24 exceeds a threshold that is such that the thread segments 33 are stretched.

The thread segments 33 are part of a plurality of threads, which are sewn so as to go through both fabric layers 31, 32 many times and in different points. Therefore, the thread segments 33 each have a predetermined length and each extend between a corresponding point of the fabric layer 31 and a corresponding point of the fabric layer 32.

Owing to the above, assuming that the panel 12 is in the inflated state, the distance between the surface 27 and the surface 28 is constant and is determined by the length of the thread segments 33.

In order to sew the fabric layers 31, 32 described above, a technique generally known as "drop stitch" can be used.

Specifically, thanks to a specific choice of the lengths of the thread segments 33, the surfaces 27 and 28 are flat and parallel to one another.

The pressure of the inflating gas, combined with the fact that the thread segments 33 are stretched, ensures a high rigidity of the panel 12 and of the entire frame 11; in particular, the space 24 can be filled with the inflating gas at relatively high pressures, for example up to 1.5 bar.

As visible from figure 4, where the panel 12 is shown in the inflated state, the wall portions 25, 26 are the same in terms of dimensions and geometry and they come in contact with one another as soon as the panel 12 changes to the deflated state.

The surface 27 is suited to receive the objects, which rest against it, and, in particular, has a symmetrical shape relative to a horizontal symmetry axis B. In particular, the sealing valve 20 is arranged at the surface 28.

The roof 14 conveniently comprises a panel 36, which has, in particular, a wall 37 delimiting, on the inside, a space 38, which is also inflatable. In other words, like the panel 12, the panel 36 can be configured in an inflated state and in a deflated state.

The wall 37 preferably is similar to the wall 23, which is why it will not be described in detail for the sake of brevity.

In order to allow the space 38 to be filled, the frame 11 conveniently comprises at least one duct 44, which establishes a fluid communication between the space 24 and the space 38. More precisely, the frame 11 comprises a plurality of ducts 44, which extend between the panels 12, 36 along a direction C, which is transverse to the surface 27, are fixed to the panels 12, 36 and are expandable as well as collapsible.

In particular, two of the ducts 44 are part of the sides 13, respectively; more in particular, the sides 13 have the same structure as the panels 12 and 36, namely they comprise respective outer wall portions, which are sewn by means of thread segments (which are not shown).

Thanks to the expandable character of the ducts 44, in the deflated state, the panels 12, 36 can be moved relative to one another so as to come in contact with one another and, in the inflated state, the pressure of the ducts 44 keeps the panels 12, 36 spaced apart from one another along a direction, which is transverse to the surface 27.

Indeed, during the filling of the space 24, the space 38 receives, through the ducts 44, the pressurised inflating gas, which causes the panel 36 to move away from the panel 12, the ducts 44 to expand and the panel 36 to be inflated.

Once the ducts 44 are extended, the ducts 44 exert a constraining reaction upon the panels 12, 36, which prevents the panels 12, 36 from further moving apart and, hence, help stiffen the frame 11.

In the example shown in figures 1 to 5, some ducts 44 are defined by tubes arranged according to rows parallel to the axis B between the sides 13 and form, in the inflated state of the panels 12, 36, a plurality of uprights aimed at supporting the panels 12, 36 in an intermediate area of the compartment 15. In particular, each row is arranged between the axis B and a respective side 13.

Furthermore, the container 10 comprises a plate 48, which is coupled, in a releasable manner, to the panels 12, 36 in the inflated state so as to at least partially close the compartment 15 at the back, namely on the opposite side relative to a front opening, through which the user U, in use, accesses the compartment 15.

For example, the material of the plate 48 is the same as the one of the outer layers of the wall portions 25, 26.

Moreover, the container 10 conveniently comprises a grating 49 (figure 5), which is coupled, in a releasable manner, to the panels 12, 36 in the inflated state so as to at least partially close the front opening of the compartment 15. For example, the material of the grating 49 is the same as the one of the outer layers of the wall portions 25, 26. The grating 49 has a function that counteracts the falling of the objects inside the compartment 15, without preventing the user U to see the same objects.

With reference to figure 5, the container 10 comprises a coupling device 50, which is fixed relative to the frame 11 and can be coupled, in a fixed position and in a releasable manner, to a coupling interface 52, which is carried by the structure 4. In particular, the coupling device 50 comprises a plurality of releasable fixing members 51, for example elastic pins (designed to be locked into or forced into respective seats of the interface 52), threaded elements or adhesive strips or Velcro® strips, which are preferably carried by the wall 37.

In particular, the coupling interface 52 is arranged at the bed 9, is carried by the bed 9 in a fixed position and comprises, more in particular, a plurality of fixing seats, which are suitable for being engaged by the fixing members 51.

Furthermore, the container 10 comprises a half-shell 55, which is coupled to the panel 12 in a fixed position and defines a cavity, which is engaged by the panel 12, at least when the latter is in the deflated state.

The perimeter of the half-shell 55 has an edge 56, which delimits an opening 57, which is parallel to the surface 27 and defines an access to the aforesaid cavity.

Furthermore, the half-shell 55 is perforated on the side opposite the opening 57 at the sealing valve 20, so that the latter can be coupled to the source of inflating gas, for example by means of a tube 58 (figure 2).

When the panel 12 and the ducts 44 are deflated, the panel 12 can be lifted. In this compact configuration of the frame 11, the cavity defined by the half-shell 55 also contains the panel 36 and the sides 13, namely the frame 11. Furthermore, according to figure 2, the edge 56 is carried by the structure 4 in a releasable manner, for example through connection elements which are not shown herein, so that the opening 57 is closed and the half-shell 55 is held in the compact configuration by the structure 4 and/or by the bed 9.

In particular, with reference to figure 2, the edge 56 is fixed to the bed 9, which closes the opening 57, in the compact configuration of the frame 11, so that the latter is hidden to the user U.

The operation of the container 10 will now be described with reference to figures 2 and 3, in which the frame 11 is already coupled, in a fixed position, to the bed 9, whereas the latter is in the lifted position.

As visible in figure 2, after having released the half-shell 55 from the bed 9, the user U couples the sealing valve 20 to the source of inflating gas through the tube 58. Thanks to the pressure of the inflating gas, the edge 56 moves away from the bed 9, while the space 24 gets filled and the panel 12 shifts to the inflated state.

Ad the same time, the inflating gas expands the ducts 44 and flows, through the ducts 44, into the space 38, which is thus filled by the inflating gas together with the panel 36 and the ducts 44, which shift to the inflated state.

At this point, the user U disconnects the tube 58 and, as a consequence, the sealing valve 20 automatically closes.

Finally, the user U couples the plate 48 to the panels 12, 36 and the grating 49 after having introduced the objects into the compartment 15.

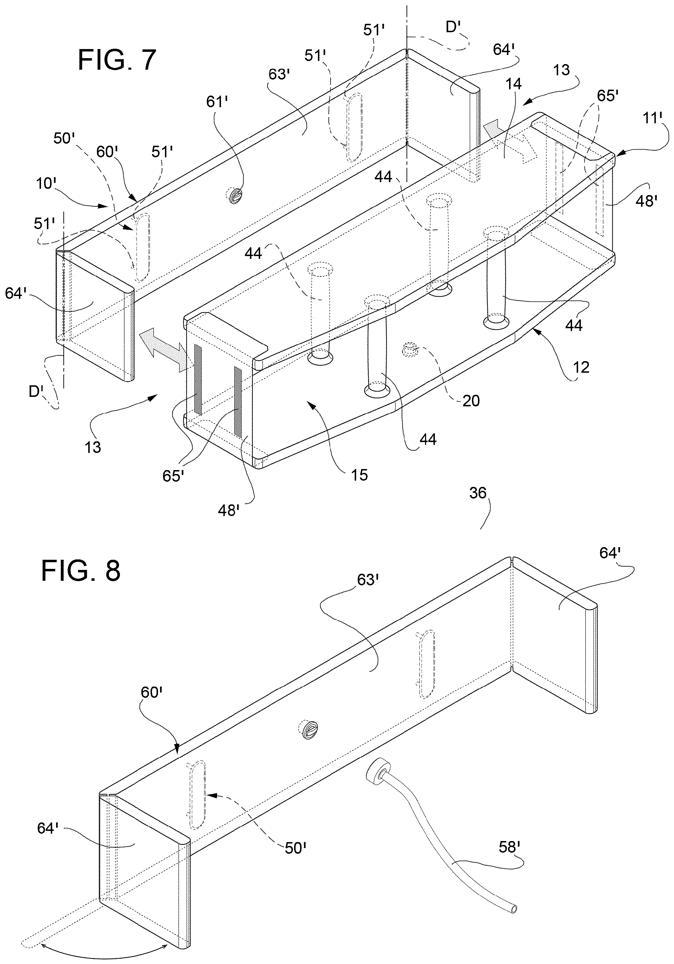

With reference to figure 7, number 10' indicates a container according to a further embodiment of the invention.

The container 10' is similar to the container 10 and will be described below only in those aspects that distinguish the former from the latter; corresponding or equivalent parts of the containers 10, 10' will be indicated, when possible, with the same reference numbers.

For example, a difference between the container 10' and the container 10 lies in the fact that the former comprises a frame 11' without the sides 13; instead of the sides 13, the container 10' comprises a pair of plates 48', which are coupled to the panels 12, 36 in a releasable manner.

For example, the material of the plates 48' is the same as the one of the outer layers of the wall portions 25, 26.

Furthermore, instead of the plate 48 and the coupling device 50 of the container 10, the container 10' comprises a coupling device 50', which comprises, in turn, a support panel 60', which can be coupled to the frame 11' in a fixed position, and coupling members 51', which are carried by the support panel 60' in a fixed position and are similar to the members 51, so as to couple the support panel 60' to the structure 4 in a releasable manner.

The panel 60', similarly to the panels 12, 36 is inflatable, so that it defines an inflatable space; in particular, the panel 60' has the same structure as the panels 12 and 36, namely it comprises outer wall portions, which are sewn by means of thread segments (which are not shown).

In order to be inflated, the panel 60' comprises a sealing valve 61'. For the sake of brevity, the following description will relate to the panel 60' in the inflated state; in the deflated state, the panel 60' can be folded, is flexible and/or can be rolled, like the panels 12, 36.

The panel 60' closes the compartment 15 at the back, when it is coupled to the frame 11', and comprises a plate 63' and at least one plate 64', which is coupled to the plate 63' in a rotary manner so as to rotate around an axis D', which is vertical in use.

More precisely, the panel 60' comprises two rotary plates 64', which can rotate around respective axes D' at the ends of the plate 63', according to a direction that is parallel to the panels 12, 36 in the inflated state.

More in detail, according to figure 8, the plates 64' can rotate between a rest position, in which they are parallel to the plate 63', and a use position, in which they are orthogonal to the plate 63' and define, together with the plates 48', the sides of the compartment 15.

The plates 48' carry releasable attachment elements 65', for example a pair of adhesive strips, so as to be carried by the respective plates 64' in a releasable position. Vice versa, according to an alternative which is not shown herein, the attachment elements 65' could be carried by the portions 64' and/or be made of Velcro®.

On the other hand, the plate 63' carries the attachment members 51' in a fixed position; correspondingly, a coupling interface (which is not shown herein) is carried by the rear wall 6, under the bed 9 when the latter is in the lifted position, so as to allow for the fixing of the coupling device 50'.

The operation of the container 10' is similar to the one of the container 10 and will be described only in what distinguishes it from the one of the container 10.

In particular, before inflating the panels 12, 36 and the ducts 44, the user U connect the sealing valve 61' to the source of inflating gas, for example through a tube 58' . In this way, the panel 60' shifts to the inflated state; then, after having caused the frame 11 to reach the inflated state as well, the user U couples the plates 64' in the use position to the plates 48', which were previously coupled to the panels 12, 36 in the inflated state.

Owing to the above, the advantages of the containers 10, 10' according to the invention are evident.

Thanks to the thread segments 33 and to the pressure of the inflating gas, the panel 12 is substantially flat, namely is lacks those annoying swellings that typical of known inflatable panels. This allows the frames 11, 11' to be easily coupled to the structure 4 and, at the same time, to be significantly rigid; moreover, they tend to steadily maintain their shape in order to support the objects in an effective manner.

The frames 11, 11' could be, for example, fixed to the floor 3.

The stiffness of the frame 11, 11' is ensured by the pressure of the inflating gas and no further stiffening elements need to be used.

Furthermore, the frames 11, 11' occupy an irrelevant space when the panels 12, 36, 60' are in the deflated state, thanks, among other things, to the possibility of folding or rolling the panels 12, 36, 60'.

Therefore, the space left free inside the cab 2 can be used for other purposes, for example moving the bed 9 to the lowered position.

Finally, the containers 10, 10' according to the invention can be subjected to changes and variants, which, though, do not go beyond the scope of protection set forth in the appended claims.

For example, the containers 10, 10' could comprise further panels similar to the panels 12, 36, 60', or the panels 36, 60' could be absent or have constructive features that are different compared to those of the panel 12, in particular they could not be inflatable.

Moreover, the space 38 could not be in fluid communication with the space 24 and the upper ends of the ducts 44 could be fixed to the panel 36 in a fluid-tight manner, so that the inflating gas introduced into the space 24 causes anyway the expansion of the ducts 44.

Finally, the sealing valves 20, 61' could be configured so as to allow for the release of the inflating gas, when appropriate, and/or be available in a different number.

## Claims

1. A container (10; 10') for a vehicle (1), said container comprising:
- a frame (11), which delimits a compartment (15) suitable for housing objects; and
- releasable coupling means (50; 60', 50'), which are carried by said frame (11) for coupling said frame (11) to a structure (4) of said vehicle (1);
said frame (11) comprising at least one inflatable portion (12, 36, 13), which defines an internal space (24, 38) provided with an inlet that can be coupled to a source of pressurised gas for filling said space (24, 38), so that said inflatable portion (12, 36, 13) passes from a deflated state, in which the volume of said space (24, 38) is minimal, to an inflated state, in which said space (24, 38) has a greater volume;
said inflatable portion (12, 36, 13) further comprising two outer walls (25, 26) and constraining means (33) carried by said outer walls (25, 26) inside said space (24, 38) for limiting the relative movement between said outer walls (25, 26) when said portion (12, 36, 13) reaches the inflated state,
wherein constraining means (33) comprise a plurality of flexible ties, each having a pre-determined length, and wherein said outer walls (25, 26) comprise respective layers of fabric (31, 32),
**characterized in that** said flexible ties are defined by a plurality of thread segments (33)
sewn to both of the layers of fabric (31, 32).

2. The container according to Claim 1, wherein the thread segments are part of a plurality of threads sewn to go through both the layers of fabric (31, 32) for a plurality of times and in a plurality of different points.

3. The container according to Claim 1 or 2, wherein said inflatable portion (12, 36, 13) comprises a first panel having said outer walls (25, 26) and said constraining means (33); said first panel being orientated horizontally when said frame (11) is coupled to said structure (4) for supporting, in use, said objects.

4. The container according to Claim 3, wherein said frame (11) comprises a second panel (36) and at least one expandable duct (44) fixed in a fluid-tight manner to said first and second panels (12, 36) and in fluidic communication with said space (24, 38).

5. The container according to Claim 3, wherein said frame (11) comprises at least one side (13), which is coupled or couplable to said first panel (12, 36) in a position such as to delimit an end of said compartment.

6. The container according to Claim 5, wherein said side (13) forms part of said inflatable portion (12, 36, 13) or defines a further internal space that is in fluid communication with said space (24, 38) and is inflatable by filling said space (24, 38).

7. The container according to any one of the preceding claims, wherein said releasable coupling means (60', 50') comprise a supporting panel (60'), which is inflatable, so that it defines a further internal space, and comprising two further outer walls and further constraining means carried by said further outer walls inside said further space for limiting the relative movement between said further outer walls when the supporting panel (60') reaches a corresponding inflated state; the releasable coupling means (60', 50') further comprising at least one attachment member carried in a fixed position by said supporting panel (60') for coupling said supporting panel (60') to said structure (4).

8. The container according to Claim 7, further comprising releasable attachment means (65') for coupling said frame in a fixed position to said supporting panel (60').

9. The container according to Claim 7 or 8, wherein said supporting panel (60') further comprises a first and a second plate (63', 64'), each having further outer walls and further constraining means (33); said second plate (64') being coupled to said first plate (63') in a rotatable manner about an axis (D') for being arranged in a position of use, where it is adapted to define, at least partially, a side (13) delimiting an end of said compartment (15).

10. The container according to any one of the preceding claims, further comprising a half-shell (55) that carries in a fixed position said inflatable portion (12) and defines a cavity engaged by said inflatable portion (12), at least when it is in the inflated state.

11. The container according to Claim 10, wherein said cavity houses the frame (11) when the inflatable portion (12) is in the deflated state.

12. A cab (2) of a heavy vehicle (1) comprising:
- a structure (4) defining a habitable space (7);
- a coupling interface (52) carried by said structure (4); and
- a container (10; 10') according to any one of the preceding claims;
wherein said releasable coupling means (50; 60', 50') are fixed to said coupling interface (52).

## Patentansprüche

1. Behälter (10; 10') für ein Fahrzeug (1), umfassend:
- einen Rahmen (11), welcher ein Abteil (15) begrenzt, dazu geeignet, Objekte aufzunehmen; und
- lösbare Kopplungsmittel (50; 60', 50'), welche von dem Rahmen (11) getragen werden, zum Koppeln des Rahmens (11) mit einer Struktur (4) des Fahrzeugs (1);
wobei der Rahmen (11) zumindest einen aufblasbaren Teil (12, 36, 13) umfasst, welcher einen Innenraum begrenzt, der mit einem Einlass versehen ist, welcher mit einer Gasdruckquelle zum Füllen des Raums (24, 38) gekoppelt werden kann, so dass der aufblasbare Bereich (12, 36, 13) von einem entlüfteten Zustand, in welchem das Volumen des Raums (24, 38) minimal ist, in einem aufgeblasenen Zustand gelangt, in welchem der Raum (24, 38) ein größeres Volumen hat;
wobei der aufblasbare Bereich (12, 36, 13) ferner zwei Außenwände (25, 26) und Haltemittel (33) umfasst, die von den Außenwänden (25, 26) innerhalb des Raums (24, 38) zur Begrenzung der relativen Bewegung zwischen den Außenwänden (25, 26) getragen werden, wenn der Teil (12, 36, 13) den aufgeblasenen Zustand erreicht,
wobei die Haltemittel (33) eine Mehrzahl flexibler Bänder umfassen, die jeweils eine vorbestimmte Länge aufweisen, und wobei die Außenwände (25, 26) jeweils Schichten aus Gewebe (31,32) umfassen,
**dadurch gekennzeichnet, dass** die flexiblen Bänder durch eine Mehrzahl von Fasersegmenten (33) definiert werden, die an beide Schichten von Gewebe (31, 32) angenäht sind.

2. Behälter gemäß Anspruch 1, bei welchem die Fasersegmente Teil einer Mehrzahl von Fasern sind, die derart vernäht sind, dass sie durch beide Gewebeschichten (31, 32) mehrmals und an einer Mehrzahl unterschiedlicher Punkte hindurchgehen.

3. Behälter gemäß Anspruch 1 oder 2, bei welchem der aufblasbare Teil (12, 36, 13) ein erstes Paneel umfasst, welches die Außenwände (25, 26) und die Haltemittel (33) aufweist; welches erste Paneel horizontal orientiert ist, wenn der Rahmen (11) mit der Struktur (4) zum Lagern der Objekte während der Benutzung gekoppelt ist.

4. Behälter gemäß Anspruch 3, bei welchem der Rahmen (11) ein zweites Paneel (36) und zumindest eine erweiterbare Leitung (44) umfasst, die fluiddicht an den ersten und zweiten Paneelen (12,36) befestigt ist und in Fluidverbindung mit dem Raum (24,38) steht.

5. Behälter gemäß Anspruch 3, bei welchem der Rahmen (11) zumindest eine Seite (13) umfasst, welche mit dem ersten Paneel (12, 36) in einer Position etwa zur Begrenzung eines Endes eines Abteils gekoppelt oder damit koppelbar ist.

6. Behälter gemäß Anspruch 5, bei welchem die Seite (13) Teil des aufblasbaren Teils (12, 36, 13) bildet oder einen weiteren Innenraum begrenzt, welcher in Fluidverbindung mit dem Raum (24, 38) steht und durch Füllen des Raums (24, 38) aufblasbar ist.

7. Behälter gemäß einem der vorhergehenden Ansprüche, bei welchem die lösbaren Kopplungsmittel (60', 50') ein Tragpaneel (60') umfassen, welches aufblasbar ist, so dass es einen weiteren Innenraum begrenzt, und welches ferner Haltemittel umfasst, die von den weiteren Außenwänden innerhalb des weiteren Raums zur Begrenzung der relativen Bewegung zwischen den weiteren Außenwänden getragen werden, wenn das Tragpaneel (60') einen entsprechenden aufgeblasenen Zustand erreicht; welche lösbaren Kopplungsmittel (60', 50') ferner zumindest ein Befestigungselement umfassen, das in einer festen Position durch das Tragpaneel (60') zum Koppeln des Tragpaneels (60') mit der Struktur (4) getragen werden.

8. Behälter gemäß Anspruch 7, ferner umfassend lösbare Befestigungsmittel (65') zum Koppeln des Rahmens in einer festen Position mit dem Tragpaneel (60').

9. Behälter gemäß Anspruch 7 oder 8, bei welchem das Tragpaneel (60')ferner eine erste und eine zweite Platte (63', 64') umfasst, die jeweils weitere Außenwände und weitere Haltemittel (33) umfassen; wobei die zweite Platte (64') mit der ersten Platte (63') drehbar um eine Achse (D) gekoppelt ist, um in eine Benutzungsposition gebracht zu werden, in welcher sie dazu vorgesehen ist, zumindest teilweise eine Seite (13) zu definieren, welche ein Ende des Abteils (15) begrenzt.

10. Behälter gemäß einem der vorhergehenden Ansprüche, ferner umfassend eine Halbschale (55), welche in einer festen Position den aufblasbaren Teil (12) trägt und einen Hohlraum begrenzt, der von dem aufblasbaren Teil (12) zumindest in seinem aufblasbaren Zustand eingenommen wird.

11. Behälter gemäß Anspruch 10, bei welchem der Hohlraum den Rahmen (11) aufnimmt, wenn der aufblasbare Teil (12) sich in dem entlüfteten Zustand befindet.

12. Kabine (2) für ein Schwerlastfahrzeug (1), umfassend:
- eine Struktur (4), die einen Aufenthaltsraum (7) definiert;
- eine Kopplungsschnittstelle (52), wie von der Struktur (4) getragen wird; und
- einen Behälter (10;10') gemäß einem der vorhergehenden Ansprüche;
wobei die lösbaren Kopplungsmittel (50;60',50') an der Kopplungsschnittstelle (52) befestigt sind.

## Revendications

1. Contenant (10 ; 10') pour un véhicule (1), ledit contenant comprenant :
- un cadre (11), qui délimite un compartiment (15) approprié pour loger des objets ; et
- des moyens de couplage amovibles (50 ; 60', 50'), qui sont portés par ledit cadre (11) pour coupler ledit cadre (11) à une structure (4) dudit véhicule (1) ;
ledit cadre (11) comprenant au moins une portion gonflable (12, 36, 13), qui définit un espace interne (24, 38) pourvu d'une entrée qui peut être couplée à une source de gaz comprimé pour remplir ledit espace (24, 38), de telle sorte que ladite portion gonflable (12, 36, 13) passe d'un état dégonflé, dans lequel le volume dudit espace (24, 38) est minimal, à un état gonflé, dans lequel ledit espace (24, 38) présente un volume plus grand ;
ladite portion gonflable (12, 36, 13) comprenant en outre deux parois extérieures (25, 26) et un moyen de confinement (33) porté par lesdites parois extérieures (25, 26) à l'intérieur dudit espace (24, 38) pour limiter le déplacement relatif entre lesdites parois extérieures (25, 26) lorsque ladite portion (12, 36, 13) atteint l'état gonflé,
dans lequel le moyen de confinement (33) comprend une pluralité de traverses flexibles, présentant chacune une longueur prédéterminée, et dans lequel lesdites parois extérieures (25, 26) comprennent des couches de tissu (31, 32) respectives,
**caractérisé en ce que** lesdites traverses flexibles sont définies par une pluralité de segments de fil (33) cousus sur les deux couches de tissu (31, 32).

2. Contenant selon la revendication 1, dans lequel les segments de fil sont une partie d'une pluralité de fils cousus pour traverser les deux couches de tissu (31, 32) une pluralité de fois et en une pluralité de points différents.

3. Contenant selon la revendication 1 ou 2, dans lequel ladite portion gonflable (12, 36, 13) comprend un premier panneau comportant lesdites parois extérieures (25, 26) et ledit moyen de confinement (33) ; ledit premier panneau étant orienté horizontalement lorsque ledit cadre (11) est couplé à ladite structure (4) pour supporter, en utilisation, lesdits objets.

4. Contenant selon la revendication 3, dans lequel ledit cadre (11) comprend un second panneau (36) et au moins un conduit extensible (44) fixé de manière étanche aux fluides auxdits premier et second panneaux (12, 36) et en communication fluidique avec ledit espace (24, 38).

5. Contenant selon la revendication 3, dans lequel ledit cadre (11) comprend au moins un côté (13), qui est couplé ou peut être couplé audit premier panneau (12, 36) dans une position de manière à délimiter une extrémité dudit compartiment.

6. Contenant selon la revendication 5, dans lequel ledit côté (13) forme une partie de ladite portion gonflable (12, 36, 13) ou définit un autre espace interne qui est en communication fluidique avec ledit espace (24, 38) et peut être gonflé en remplissant ledit espace (24, 38).

7. Contenant selon l'une quelconque des revendications précédentes, dans lequel lesdits moyens de couplage amovibles (60', 50') comprennent un panneau de support (60'), qui est gonflable, de telle sorte qu'il définit un autre espace interne, et comprenant deux autres parois extérieures et un autre moyen de confinement porté par lesdites autres parois extérieures à l'intérieur dudit autre espace pour limiter le déplacement relatif entre lesdites autres parois extérieures lorsque le panneau de support (60') atteint un état gonflé correspondant ; les moyens de couplage amovibles (60', 50') comprenant en outre au moins un élément de fixation porté dans une position fixe par ledit panneau de support (60') pour coupler ledit panneau de support (60') à ladite structure (4).

8. Contenant selon la revendication 7, comprenant en outre un moyen de fixation amovible (65') pour coupler ledit cadre dans une position fixe audit panneau de support (60').

9. Contenant selon la revendication 7 ou 8, dans lequel ledit panneau de support (60') comprend en outre une première et une seconde plaque (63', 64'), présentant chacune d'autres parois extérieures et un autre moyen de confinement (33) ; ladite seconde plaque (64') étant couplée à ladite première plaque (63') d'une manière rotative autour d'un axe (D') pour être agencée dans une position d'utilisation, où elle est adaptée pour définir, au moins partiellement, un côté (13) délimitant une extrémité dudit compartiment (15).

10. Contenant selon l'une quelconque des revendications précédentes, comprenant en outre une demi-coque (55) qui porte dans une position fixe ladite portion gonflable (12) et définit une cavité mise en prise par ladite portion gonflable (12), au moins lorsqu'elle est dans l'état gonflé.

11. Contenant selon la revendication 10, dans lequel ladite cavité loge le cadre (11) lorsque la portion gonflable (12) est dans l'état dégonflé.

12. Cabine (2) de véhicule lourd (1) comprenant :
- une structure (4) définissant un espace d'habitacle (7) ;
- une interface de couplage (52) portée par ladite structure (4) ; et
- un contenant (10 ; 10') selon l'une quelconque des revendications précédentes ;
dans laquelle lesdits moyens de couplage amovibles (50 ; 60', 50') sont fixés à ladite interface de couplage (52).
